# EUROPEAN PATENT SPECIFICATION

(11) **EP 3 189 689 B1**
(45) Date of publication and mention of the grant of the patent: **29.04.2020**
(21) Application number: 15839658.0
(22) Date of filing: 06.09.2015
(51) Int. Cl.: H04W 36/00, H04W 36/30, H04W 36/14, H04W 48/08, H04W 48/10, H04W 48/12, H04W 48/18, H04W 36/38

(54) **SYSTEM AND METHOD FOR INTER-RADIO ACCESS TECHNOLOGY HANDOFF**
SYSTEM UND VERFAHREN ZUR ÜBERGABE VON INTERFUNKZUGANGSTECHNOLOGIEN
SYSTÈME ET PROCÉDÉ DE TRANSFERT DE TECHNOLOGIE D'ACCÈS INTER RADIO

(30) Priority: 08.09.2014 US 201462047576 P; 02.09.2015 US 201514843495
(43) Date of publication of application: 12.07.2017
(73) Proprietor: HUAWEI TECHNOLOGIES CO., LTD., Shenzhen Guangdong 518129 (CN)
(72) Inventor: CALCEV, George, Hoffman Estates, Illinois 60192 (US)
(74) Representative: Epping - Hermann - Fischer
(86) International application number: PCT/CN2015/088981
(87) International publication number: WO 2016/037546

(56) References cited:
- WO-A1-2008/022593
- WO-A1-2008/157123
- WO-A1-2009/047477
- WO-A1-2014/011094
- US-A1- 2010 142 478
- US-A1- 2011 194 530
- US-A1- 2013 272 269
- US-A1- 2014 113 590

## Description

### TECHNICAL FIELD

The present invention relates to a system and method for wireless communications, and, in particular, to a system and method for inter-radio access technology handoff.

### BACKGROUND

Wireless communications devices may be multi-mode wireless communications devices. For example, a smart phone may support a cellular interface, a Wi-Fi interface, and a Bluetooth interface. A multi-mode wireless communications device may switch between different types of networks to maintain good connectivity and user experience. Wireless network providers, or operators, may not be able to guarantee similar customer experiences in similar conditions of radio frequency (RF) coverage and network load in different networks.

US 2010/0142478 A1 discloses a method and apparatus for enabling a network to provide information associated with neighboring network of different access technologies to the wireless device, prior to the wireless device determining the need for a handover. When a determination is made by the network that a handover to a new access network is required, the network may send a message to the wireless device that commands the wireless device to leave a currently used access network. Alternatively, the network may send a message to the wireless device that guides or obligates the wireless device to select one of the access networks in the list, provided by the network, in case the wireless device chooses to make a handover. Upon receipt of a command message, the wireless device leaves a currently used access network either immediately or a reasonable time after having set up a connection to a new access network for ensuring smooth handover.

### SUMMARY

The invention is defined in the attached independent claims. In the following, parts of the description and drawings referring to embodiments which are not covered by the claims are not presented as embodiments of the invention, but as examples useful for understanding the invention. An embodiment method includes receiving, by a station (STA) from an access point (AP), a message using a first radio access technology (RAT), where the STA is configured to operate in the first RAT and a second RAT, wherein the first RAT is a Wi-Fi and the second RAT is a cellular and wherein the message comprises a channel quality indicator, CQI. Determining by the STA, whether to transition from the first RAT to the second RAT in accordance with the message and based on the CQI. The method also includes, upon determining to transition from the first RAT to the second RAT, transmitting, by the STA to the AP, a disassociation request, and transmitting, by the STA to a communications controller, an association request.

An embodiment method includes receiving, by an access point (AP) from a communications management server (CMS), a first channel quality report indicating a first radio access technology (RAT) and a second RAT and determining a second channel quality report in accordance with the first channel quality report. The method also includes transmitting, by the AP to a station (STA), the second channel quality report and a reason code for the STA transitioning from the first RAT to the second RAT and receiving, by the AP from the STA, a disassociation request in accordance with the second channel quality report.

An embodiment station (STA) includes a processor and a non-transitory computer readable storage medium storing programming for execution by the processor. The programming including instructions to receive, from an access point (AP), a message using a first radio access technology (RAT), where the STA is configured to operate in the first RAT and a second RAT, wherein the first RAT is a Wi-Fi and the second RAT is a cellular and wherein the message comprises a channel quality indicator, CQI and determine whether to transition from the first RAT to the second RAT in accordance with the message and based on the CQI. The programming also includes instructions to, upon determining to transition from the first RAT to the second RAT, transmit, to the AP, a disassociation request, and transmit, to a communications controller, an association request.

An embodiment station (STA) includes a processor and a receiving element that receives, from an access point (AP), a message using a first radio access technology (RAT), where the STA is configured to operate in the first RAT and a second RAT and determine whether to transition the first RAT to the second RAT in accordance with the message. The station also includes a transmitting element that transmits, to the AP, a disassociation request, and transmits, to a communications controller, an association request, upon determining to transition from the first RAT to the second RAT.

An embodiment access point (AP) includes a processor and a non-transitory computer readable storage medium storing programming for execution by the processor. The programming including instructions to receive, from a communications management server (CMS), a first channel quality report indicating a first radio access technology (RAT) and a second RAT and determine a second channel quality report in accordance with the first channel quality report. The programming also includes instructions to transmit, to a station (STA), the second channel quality report and a reason code for the STA transitioning from the first RAT to the second RAT and receive, by the AP from the STA, a disassociation request in accordance with the second channel quality report.

An embodiment access point (AP) includes a processor and a receiving element that receives, from a communications management server (CMS), a first channel quality report indicating a first radio access technology (RAT) and a second RAT; a determining element that determines a second channel quality report in accordance with the first channel quality report. The AP also includes a transmitting element that transmits, to a station (STA), the second channel quality report and a reason code for the STA transitioning from the first RAT to the second RAT and the receiving element receives, from the STA, a disassociation request in accordance with the second channel quality report.

The foregoing has outlined rather broadly the features of an embodiment of the present invention in order that the detailed description of the invention that follows may be better understood. Additional features and advantages of embodiments of the invention will be described hereinafter, which form the subject of the claims of the invention.

### BRIEF DESCRIPTION OF THE DRAWINGS

For a more complete understanding of the present invention, and the advantages thereof, reference is now made to the following descriptions taken in conjunction with the accompanying drawings, in which:
Figure 1 illustrates a diagram of an embodiment multi-radio access technology (RAT) system;
Figure 2 illustrates an embodiment message diagram for switching RAT connections;
Figure 3 illustrates another embodiment message diagram for transitioning RAT connections;
Figure 4 illustrates an additional embodiment message diagram for transitioning RAT connections;
Figure 5 illustrates another embodiment message diagram for transitioning RAT connections;
Figure 6 illustrates an additional embodiment message diagram for transitioning RAT connections;
Figure 7 illustrates a flowchart for an embodiment method of transitioning RAT connections performed by a station (STA);
Figure 8 illustrates a flowchart for an embodiment method of transitioning RAT connections performed by an access point (AP);
Figure 9 illustrates a flowchart for an embodiment method of transitioning RAT connections performed by a communications management server (CMS);
Figure 10 illustrates a block diagram of an embodiment processing system; and
Figure 11 illustrates a block diagram of an embodiment a transceiver.

Corresponding numerals and symbols in the different figures generally refer to corresponding parts unless otherwise indicated. The figures are drawn to clearly illustrate the relevant aspects of the embodiments and are not necessarily drawn to scale.

### DETAILED DESCRIPTION OF ILLUSTRATIVE EMBODIMENTS

It should be understood at the outset that although an illustrative implementation of one or more embodiments are provided below, the disclosed systems and/or methods may be implemented using any number of techniques, whether currently known or not. The disclosure should in no way be limited to the illustrative implementations, drawings, and techniques illustrated below, including the exemplary designs and implementations illustrated and described herein, but may be modified within the scope of the appended claims.

One cause of different user experiences with the use of different network types within a multi-mode device is that each device implements its own algorithm to move between different radio access technologies (RATs). The connection manager may belong to the operating system, which is controlled by the device vendor. Also, the wireless interface for a particular RAT link does not have information about the quality of other RAT link conditions.

An embodiment provides a mechanism for a station (STA) to obtain information about the quality of a link in alternative RAT types, such as cellular links, over a Wi-Fi interface. The STA may compare the link metrics of other RAT types to the Wi-Fi link metric, and determine whether to remain on the Wi-Fi connection or move traffic to another RAT type based on this comparison.

An embodiment includes a vendor specific field in the neighbor report to indicate to a STA over Wi-Fi for the STA to move its data to another RAT type from the Wi-Fi link. An embodiment field indicates the priority of the cellular data link with respect to other Wi-Fi links. An embodiment field indicates reason codes for a Wi-Fi device to move over to cellular links. An embodiment protocol enables a STA operating in a first RAT link to request information about the link connectivity in a second RAT link, and, based on this request, disassociate form the first RAT link and associate with the second RAT link.

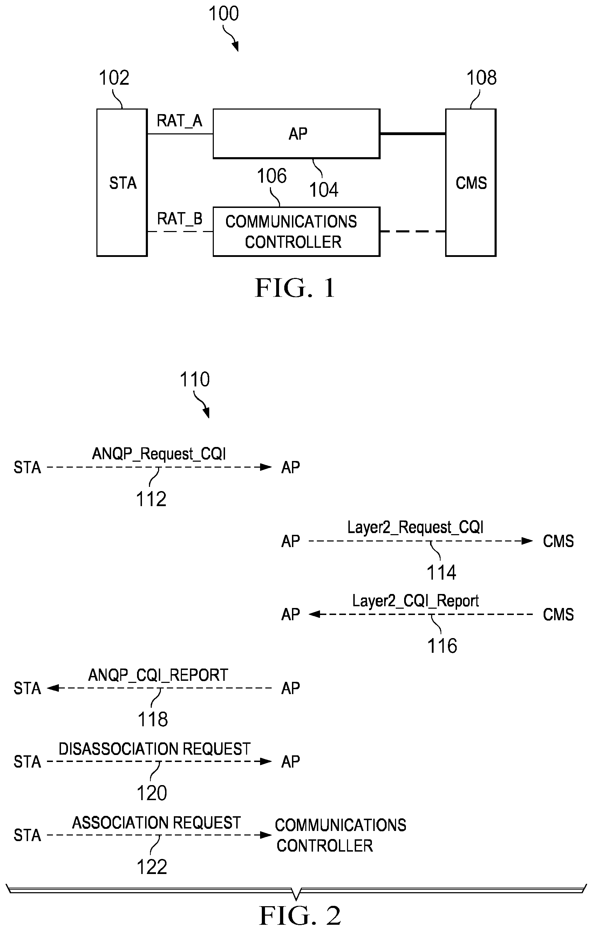

Figure 1 illustrates network 100 for communicating data. Network 100 includes communications management server (CMS) 108. Information about the link quality for multiple RATs is collected and made available by CMS 108. STA 102 is capable of using a wireless or interface or a wired connection to establish a direct communication with CMS 108. One STA is depicted, but many more STAs may be present in a network. STA 102 may be any component capable of establishing a wireless connection, such as a cell phone, smart phone, tablet, or sensor. Serving access point (AP) 104 is coupled to STA 102 over RAT_A, and to CMS 108. Serving AP 104 relays communications between STA 102 and CMS 108, for example at the layer 2 level. Serving AP 104 receives wireless frames from STA 102 via RAT-A, extracts the layer 2 data, and transmits it to CMS 108 over another interface, which may be a wired interface or a wireless interface. Example interfaces between AP 104 and CMS 108 include a cellular connection, Wi-Fi, Ethernet, or optical cables. In one example, AP 104 is a Wi-Fi AP. CMS 108 is also coupled to a communications controller via another link. Candidate AP provides an alternative connection means to STA 102 over RAT_B. Because CMS 108 is coupled to both AP 104 and communications controller 106, it may obtain information about the link quality of both RAT_A and RAT_B. Communications controller 106 may be any component capable of providing wireless access by establishing uplink and/or downlink connections with STA 102, such as a base station, a NodeB, an enhanced nodeB (eNB), an access point, a picocell, a femtocell, relay node, and other wirelessly enabled devices. In some embodiments, network 100 may include various other wireless devices, such as a backhaul network or relays.

In one example, the generic advertisement service (GAS) protocol is used between STA 102 and AP 104, where the GAS protocol carries access network query protocol (ANQP) queries and responses. The ANQP protocol is extended with another type of ANQP query and response for RAT link quality of alternative RAT links. Thus, a STA connected via, for example, Wi-Fi, may query the CMS about the cellular link connectivity. The decision to remain on RAT A or change to RAT_B may be performed at STA 102. The Wi-Fi interface of STA 102 may be used to obtain the metrics for RAT A and for RAT_B. A decision on whether to remain with RAT A or switch to RAT_B may be made by comparing the link qualities of RAT_A and RAT_B.

An embodiment involves a solicited neighbor request for cellular information. A dual-mode device, for example a device which supports both Wi-Fi and cellular, for example STA 102, transmits an ANQP request to AP 104 requesting information about the neighbor information of AP 104. Serving AP 104 responds to STA 102 over RAT A with a neighbor response which contains a neighbor report element which contains vendor specific information about the cellular link priority. STA 102 then evaluates the priorities of the various links. Then, STA 102 may determine whether to move to a cellular link based on the evaluated priorities.

Another embodiment involves an unsolicited neighbor response for cellular information. Serving AP 104 transmits to STA 102, a dual-mode device, a basic service set (BSS) transition management frame which contains a vendor specific element with cellular priority. The BSS transition management frame indicates that STA 102 should move to the cellular link from the Wi-Fi link.

In another embodiment, AP 104 transmits a query to CMS 108 about the link quality of RAT_B. Serving AP 104 then compares the quality of RAT_B to RAT_A. Based on this comparison, AP 104 determines whether to recommend that STA 102 switch from RAT A to RAT_B. Serving AP 104 may transmit a message to STA 102 over RAT A instructing STA 102 to move from RAT A to RAT B.

In an additional embodiment, the CMS or another entity compares the link quality of different RAT links. This comparison may be performed periodically, or may be triggered by a specific event, such as the quality of the link in RAT A going below a threshold, or the difference in quality between RAT_B and RAT_A going above a threshold. Based on this comparison, the CMS generates a control command to be sent to the STA instructing the STA to transition from RAT_A to RATB. In another example, a control command is transmitted from the CMS to the AP, which forwards the command to the STA to change RAT links.

In another embodiment, the STA receives a management command from the CMS to transition to a different wireless local area network (WLAN) AP, or to a different RAT, for example from WLAN to cellular. The command may be in the form of a list of WLAN APs and Cellular network identifiers, where each of the list entries has associated a preference value, for example from 0 to 255. The STA compares the recommended APs or BSSs and cellular networks, and selects a network for handover based on the preference value and other metrics of traffic, interference, and quality of service (QoS) parameters.

In an additional embodiment, instead of a preference value, the entries have measured or estimated metrics, such as signal strength (received signals strength indication (RSSI), load, or throughput. The STA then compares the metrics and selects the best RAT based on the metrics and/or other local measurements, such as noise level, interference level, busyness of channel, and received RSSI.

A multiband operations (MBO) cellular data link request vendor specific element may be included in a message from the AP to the STA to recommend that the STA move its traffic to a cellular link. The vendor specific element may include an element ID, a length, an organization identifier, and a vendor-specific content. The MBO cellular data link request vendor specific element is included in the data portion of the vendor specific sub-element, which may have an ID of 221.

In a BSS transition management example, vendor-specific elements may be used to recommend that a STA move to a cellular network. The vendor-specific element may also provide a reason for this recommendation.

For post association in BSS transition management, a STA may request that the associated AP provide a prioritized list of BSSs within an extended service set (ESS) to which the STA is recommended to associate. The STA may transmit a BSS transition management query frame, which may include a category, an action, a dialog token, a BSS transition query reason, and optionally, a BSS transition candidate list. When the AP receives a BSS transition management query, it responds with a BSS transition request management frame. The BSS transition management query frame may contain an optional vendor specific element.

An MBO cellular data link vendor specific element may include an element ID, a length, an organization identifier, a cellular data link transition request, and a cellular data link preference. In one example, the cellular data link transition request is an octet bit field, where a value of 1 indicates to the AP that the STA wants to move its traffic to the cellular data link, a value of 0 indicates that the STA prefers to remain with the same ESS, and values 2 and greater are reserved.

The cellular data link preference field may be present when the cellular data link field has a value of 1. The cellular data link transition request may be an octet bit field which indicates the preference level for the transition to the cellular link, where a value of 255 indicates the highest preference, and a value of 0 indicates the lowest preference. Alternatively, a value of 0 indicates the highest preference and a value of 255 indicates the lowest preference.

The AP may request that a STA transition to a different BSS or within the same BSS in a different channel via the BSS transition request frame. The BSS transition management request frame includes a category, an action, a dialog token, a request mode, a disassociation timer, a validity interval, a BSS termination duration, a session information uniform resource locator (URL), BSS transition candidate list entries, an MBO cellular data link request vendor specific element, and an MBO reason codes vendor specific element.

The request mode field, when the disassociation imminent bit equals one, may indicate that the BSS transition request will be followed by a disassociation request management frame. In this case, the STA is mandated to leave the channel and move to the recommended channel. A non-zero value for the disassociation timer indicates that the STA will send a disassociation request before its expiration. On the other hand, a zero value indicates that there is no limit on when the disassociation request will be sent.

The request mode field may also indicate that the BSS will terminate. When the request mode field indicates that the BSS will terminate, the AP disassociates the STA and the STA is mandated to leave the BSS and move to the recommended channel. The BSS transition request indicates the recommended transition channels and BSS via the BSS transition candidate list entries, which contain zero or more neighbor report elements. A neighbor report may contain the BSS transition candidate preference sub-element. The vendor specific element contains an element ID, length, organization identifier, and MBO reason codes for transition requests. The MBO reason codes are an octet bit field with the reason code ID for the transition request. Table 1 illustrates the MBO reason codes.

**Table 1**

| Transition Reason Value | Description |
|---|---|
| 0 | Unspecified |
| 1 | Excessive frame loss rate |
| 2 | Excessive delay for current traffic stream |
| 3 | Insufficient QoS capacity for current traffic stream |
| 4 | Load balancing |
| 5 | Low RSSI |
| 6 | Received too many retransmissions |
| 7 | High Interference |
| xx-255 | Reserved |

The STA that received a BSS transition management frame with the disassociation imminent bit set to zero and BSS termination bit set to zero may respond with a BSS transition response frame, where the status code indicates acceptance or rejection of the request. If the STA rejects the request, the STA may request to retain the association with the BSS via the BSS termination delay field. If the STA accepts the transition request, the STA may indicate the BSS candidate transition list in its response.

A transition request for the STA to transition from WiFi to cellular may originate in a variety of manners. The transition request may be unsolicited from the AP to the STA, for example for a load balancing purpose. Alternatively, the STA requests to transition carriers from the AP via an initial transition request before receiving the transition request.

Figure 2 illustrates message diagram 110 for an embodiment pull protocol for transitioning RAT links. Initially, a STA transmits message 112 to an AP, requesting channel quality information for multiple RAT links. For example, this message may be an ANQP request channel quality indicator (CQI) message. This message is transmitted over a first RAT, which may be Wi-Fi. Then, in message 114, the AP forwards this request to a CMS. The forwarded request may be in the form of a layer 2 request CQI message. The message is converted from an ANQP message to a layer 2 message by extracting the layer 2 elements of the ANQP message. The connection between the AP and the CMS may be a wired connection or wireless connection. For example, the connection may be cellular, Wi-Fi, Ethernet, or over optical cables.

In response to message 114, the CMS transmits a channel quality report to the AP in message 116. The message may be a layer 2 CQI report.

Then, in message 118, the AP forwards the channel quality report to the STA, for example as an ANQP CQI report. The message is converted from a layer 2 message to an ANQP message by inserting the layer 2 message in the ANQP message.

The STA determines whether to transition RAT links based on the channel quality message. For example, the STA may compare metrics of the initial RAT to metrics of one or more other RATs. When the STA decides to transition RATs, it transmits a dissociation request to the AP over the initial RAT link in message 120, initiating dissociation. Also, the STA transmits an associating request message to the communications controller over the new RAT link in message 122, initiating association of the STA with the communications controller.

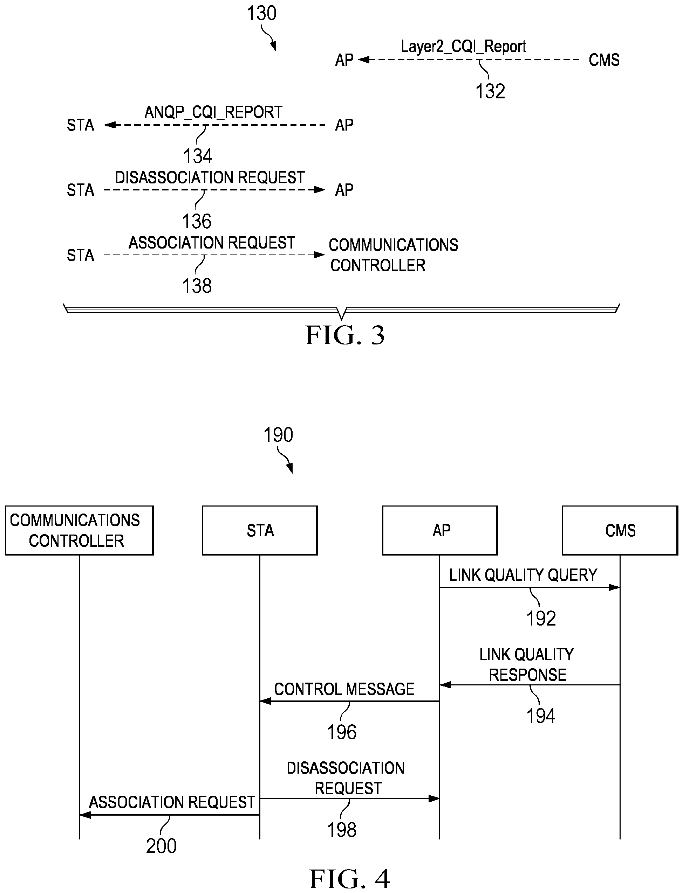

Figure 3 illustrates message diagram 130 for an embodiment push protocol for transitioning RAT links. Initially, the CMS decides to transmit a channel quality report to an AP via message 132. The transmission may be periodic, or it may be triggered by an event, such as detecting good quality in a particular RAT link. The message is transmitted over a channel between the CMS and the AP, which may be a wireless channel or a wired channel. For example, the channel may be cellular, Wi-Fi, Ethernet, or over optical cables. The message may be a layer 2 CQI report. Then, the AP forwards the channel quality message to a STA over an initial RAT in message 134. The initial RAT link may be Wi-Fi. The message may be an ANQP CQI report. The AP may convert the layer 2 to message to an ANQP message, for example by inserting the layer 2 message in the ANQP message.

The STA determines whether to transition RAT links based on the channel quality message. For example, the STA may compare metrics of the initial RAT link to metrics of one or more other RAT links. When the STA decides to transition RAT links, it transmits a dissociation request to the AP over the initial RAT in message 136, initiating dissociation. Also, the STA transmits an association request message to the selected communications controller over the new RAT link in message 138, initiating association of the STA with the communications controller.

Figure 4 illustrates message diagram 190 for an embodiment protocol where an AP determines whether a STA should transition RAT links. Initially, in message 192, the AP transmits a link quality query to a CMS, for example, over a wireless or wired channel. The CMS is aware of the quality of multiple RAT links.

In response, the CMS transmits a link quality response to the AP in message 194. The link quality response, which may be a layer 2 message, indicates the quality of one or more RAT links.

Then, the AP determines whether an AP should transition RAT links based on the link qualities of the RATs. When the AP determines that a STA should transition RAT links, the AP transmits message 196 to the STA over the initial RAT link. Message 196 may be a control message, which may be an ANQP message.

Then, the STA transmits a dissociation request in message 198 to the AP over the initial RAT link, and the STA disassociates from the AP.

Also, the STA transmits an association request to the communications controller over a new RAT link in message 200. The STA then associates with the communications controller using the new RAT.

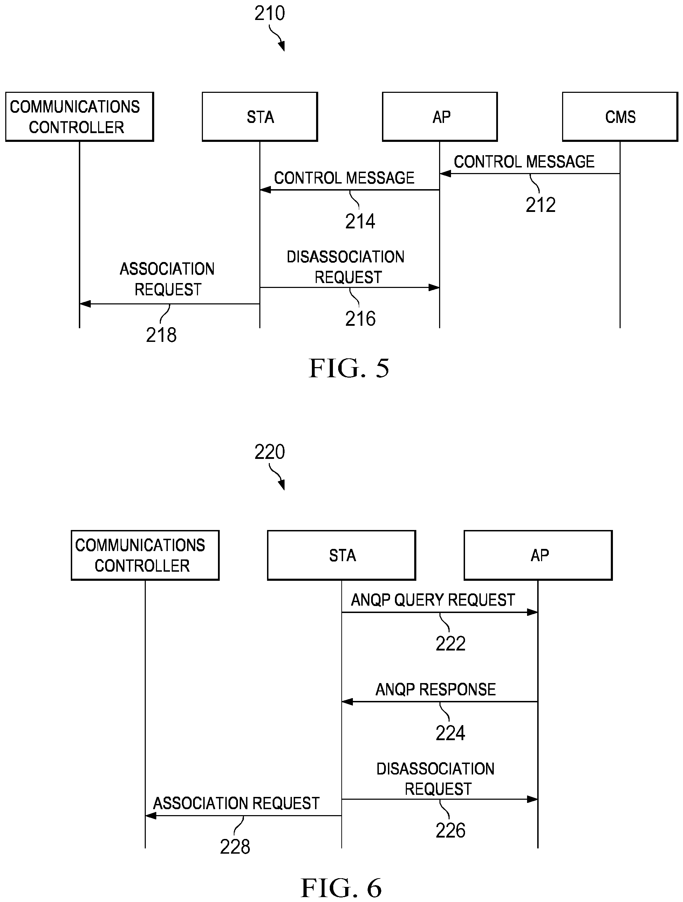

Figure 5 illustrates message diagram 210 for an embodiment protocol where a CMS determines whether a STA should transition RAT links. The CMS has knowledge of channel quality for multiple RAT links. The CMS determines whether a STA should transition RAT links based on the channel quality of the initial RAT link the STA is using and the channel qualities of other RAT links that the STA could use. When the CMS determines that the STA should transition RAT links, the CMS transmits a control message, message 212, to the AP. The control message may be a layer 2 message transmitted over a wireless or wired channel.

Then, the AP forwards the control message to the STA in message 214 over the initial RAT link. The control message indicates a new RAT link that the STA should transition to. The control message may be an ANQP message.

The STA then transmits a disassociation request in message 216 to the AP over the initial RAT link, initiating a disassociation from the AP.

Also, the STA transmits an association request to the communications controller in message 218 over the new RAT link. The STA then associates with the communications controller, and communicates using the new RAT.

Figure 6 illustrates message diagram 220 for an ANQP query by a STA to an AP of a neighbor list to obtain the preference value for cellular transition. The ANQP query request may be transported in the query request field of a GAS request frame. The ANQP Query request specifies the ANQP neighbor report Info ID element. In message 222, the STA requests that an AP provides a prioritized list of BSSs within the ESS to which the STA is recommended to associate. In one example, the STA is associated with the AP. Alternatively, the STA is not associated with the AP.

The AP responds with an ANQP response in message 224. The ANQP response may contain the neighbor report ANQP element, which contains a list of neighbor report elements. The neighbor report elements contain the BSS transition candidate preference sub-element (ID = 3) to indicate the preference value for each BSS in the neighbor report element.

The STA determines whether to transition RAT links based on the ANQP response in message 226. When the STA decides to transition RAT links, the STA transmits a disassociation request to the AP (or to the AP to which the STA is associated). The STA then disassociates from that AP.

Also, the STA transmits an association request to a new AP in message 228. The STA then associates with the new AP. The STA proceeds to communicate with the communications controller using the new RAT link.

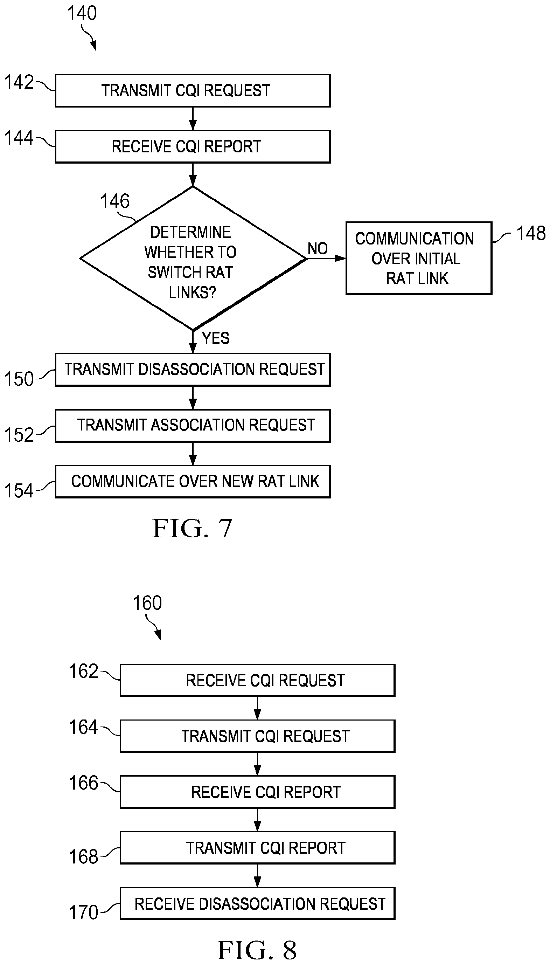

Figure 7 illustrates flowchart 140 for an embodiment method of transitioning RAT links, which may be performed by a STA. Initially, in step 142, the STA transmits a CQI request to a AP over an initial RAT link. The CQI request may request the CQIs of other RAT links available to the STA. The initial RAT link may be a Wi-Fi link. In one embodiment, the STA transmits an ANQP query request, which is transported in the query request field of a GAS request frame. The ANQP query request specifies the ANQP neighbor report InfoID element. In some embodiments, the STA is not associated with the AP. In additional embodiments, step 142 is not performed.

In step 144, the STA receives a CQI report from the AP over the initial RAT link. The CQI report may be an ANQP CQI report indicating the channel quality of RAT links. In one example, the AP transmits an ANQP response, which contains a neighbor report ANQP element. The neighbor report ANQP element contains a list of neighbor report elements, which contain the BSS transition candidate preference. The channel quality report, or CQI report, may be provided in a variety of manners. The channel quality report may be provided via the ANQP protocol, before association, after association, or both before and after association. In another example, the channel quality report is received via dedicated management frames after association. In additional examples, the channel quality report is provided via a probe response or a beacon frame. In one example the channel quality report is received based on a request from the STA. Alternatively, the channel quality report is received unsolicited from the AP to the STA, for example for load balancing purposes. The AP may be a serving AP, or an AP to which the STA is not yet associated.

Then, in step 146, the STA determines whether to transition RAT links based on the CQI report received in step 144. The STA may decide to transition RAT links when the CQI of another RAT link is better than the CQI of the initial RAT link. When the STA decides not to transition RAT links, it proceeds to step 148. On the other hand, when the STA decides to transition RAT links, it proceeds to step 150.

In step 148, the STA continues to communicate with the AP over the initial RAT link. The STA transmits and receives data, as well as control information.

In step 150, the STA transmits a dissociation request to the AP over the initial RAT link. The STA then disassociates from the AP, and they cease communication.

In step 152, the STA transmits an association request to a communications controller over a new RAT link. The STA proceeds to associate with the communications controller.

Next, in step 154, the STA communicates with the communications controller over the new RAT link. The station transmits and receives data as well as control information.

Figure 8 illustrates flowchart 160 for an embodiment method of transitioning RAT links, which may be performed by an AP. Initially, in step 162, the AP receives a CQI request from a STA over an initial RAT link. The CQI request may be an ANQP CQI request. The ANQP request may be transported in the query request filed of GAS request frames, and may specify the ANQP neighbor report InfoID element. In one example, the STA is not associated with the STA. Then, in step 164, the AP transmits the CQI request to a CMS. The channel between the AP and the CMS may be a wired channel or a wireless channel. The transmitted CQI request may be a layer 2 CQI request. The AP may convert the CQI request from an ANQP CQI request to a layer 2 CQI request, for example by extracting the layer 2 CQI request from the ANQP CQI request. In some embodiments, steps 162 and 164 are not performed.

In step 166, the AP receives a CQI report from the CMS. The received CQI report may be a layer 2 CQI report.

Then, in step 168, the AP transmits the CQI report to the STA over the initial RAT link. The transmitted CQI report may be an ANQP CQI report. The AP may convert the layer 2 CQI report received in step 166 to the ANQP CQI report, for example by inserting the layer 2 CQI report in the ANQP CQI report.

In step 170, the AP receives a dissociation request from the STA over the initial RAT link. The AP then dissociates from the STA, and communications between the AP and the STA cease. In some examples, step 170 is not performed. For example, step 170 may only be performed when the STA decides to transition RAT links.

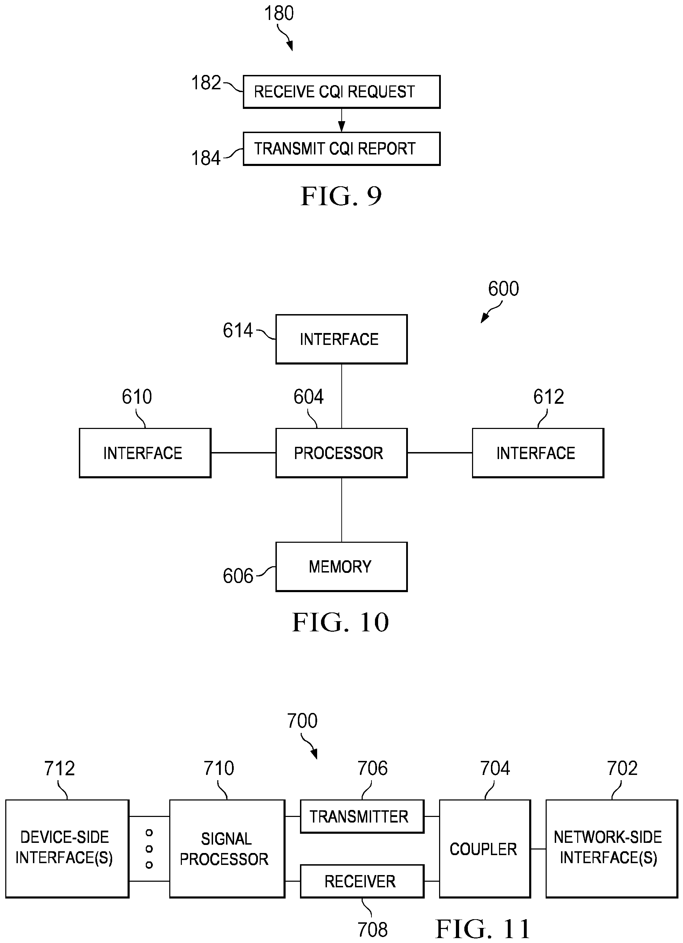

Figure 9 illustrates flowchart 180 for an embodiment method of transitioning RAT links, which may be performed by a CMS. Initially, in step 182, the CMS receives a CQI request from an AP. The channel between the CMS and the AP may be a wired or wireless channel. The CQI request may be a layer 2 CQI request. In some embodiments, instead of receiving a CQI request, the CMS decides on its own to transmit a CQI report, for example periodically, or based on a trigger, such as a high CQI for a particular RAT link.

Then, in step 184, the CMS transmits a CQI report to the AP. The CQI report may be a layer 2 CQI report.

Figure 10 illustrates a block diagram of an embodiment processing system 600 for performing methods described herein, which may be installed in a host device. As shown, the processing system 600 includes a processor 604, a memory 606, and interfaces 610-614, which may (or may not) be arranged as shown in Figure 10. The processor 604 may be any component or collection of components adapted to perform computations and/or other processing related tasks, and the memory 606 may be any component or collection of components adapted to store programming and/or instructions for execution by the processor 604. In an embodiment, the memory 606 includes a non-transitory computer readable medium. The interfaces 610, 612, 614 may be any component or collection of components that allow the processing system 600 to communicate with other devices/components and/or a user. For example, one or more of the interfaces 610, 612, 614 may be adapted to communicate data, control, or management messages from the processor 604 to applications installed on the host device and/or a remote device. As another example, one or more of the interfaces 610, 612, 614 may be adapted to allow a user or user device (e.g., personal computer (PC), etc.) to interact/communicate with the processing system 600. The processing system 600 may include additional components not depicted in Figure 10, such as long term storage (e.g., non-volatile memory, etc.).

In some embodiments, the processing system 600 is included in a network device that is accessing, or part otherwise of, a telecommunications network. In one example, the processing system 600 is in a network-side device in a wireless or wireline telecommunications network, such as a base station, a relay station, a scheduler, a controller, a gateway, a router, an applications server, or any other device in the telecommunications network. In other embodiments, the processing system 600 is in a user-side device accessing a wireless or wireline telecommunications network, such as a mobile station, a user equipment (UE), a personal computer (PC), a tablet, a wearable communications device (e.g., a smartwatch, etc.), or any other device adapted to access a telecommunications network.

In some embodiments, one or more of the interfaces 610, 612, 614 connects the processing system 600 to a transceiver adapted to transmit and receive signaling over the telecommunications network. Figure 11 illustrates a block diagram of a transceiver 700 adapted to transmit and receive signaling over a telecommunications network. The transceiver 700 may be installed in a host device. As shown, the transceiver 700 comprises a network-side interface 702, a coupler 704, a transmitter 706, a receiver 708, a signal processor 710, and a device-side interface 712. The network-side interface 702 may include any component or collection of components adapted to transmit or receive signaling over a wireless or wireline telecommunications network. The coupler 704 may include any component or collection of components adapted to facilitate bi-directional communication over the network-side interface 702. The transmitter 706 may include any component or collection of components (e.g., up-converter, power amplifier, etc.) adapted to convert a baseband signal into a modulated carrier signal suitable for transmission over the network-side interface 702. The receiver 708 may include any component or collection of components (e.g., down-converter, low noise amplifier, etc.) adapted to convert a carrier signal received over the network-side interface 702 into a baseband signal. The signal processor 710 may include any component or collection of components adapted to convert a baseband signal into a data signal suitable for communication over the device-side interface(s) 712, or vice-versa. The device-side interface(s) 712 may include any component or collection of components adapted to communicate data-signals between the signal processor 710 and components within the host device (e.g., the processing system 600, local area network (LAN) ports, etc.).

The transceiver 700 may transmit and receive signaling over any type of communications medium. In some embodiments, the transceiver 700 transmits and receives signaling over a wireless medium. For example, the transceiver 700 may be a wireless transceiver adapted to communicate in accordance with a wireless telecommunications protocol, such as a cellular protocol (e.g., long-term evolution (LTE), etc.), a wireless local area network (WLAN) protocol (e.g., Wi-Fi, etc.), or any other type of wireless protocol (e.g., Bluetooth, near field communication (NFC), etc.). In such embodiments, the network-side interface 702 comprises one or more antenna/radiating elements. For example, the network-side interface 702 may include a single antenna, multiple separate antennas, or a multi-antenna array configured for multi-layer communication, e.g., single input multiple output (SIMO), multiple input single output (MISO), multiple input multiple output (MIMO), etc. In other embodiments, the transceiver 700 transmits and receives signaling over a wireline medium, e.g., twisted-pair cable, coaxial cable, optical fiber, etc. Specific processing systems and/or transceivers may utilize all of the components shown, or only a subset of the components, and levels of integration may vary from device to device.

While several embodiments have been provided in the present disclosure, it should be understood that the disclosed systems and methods might be embodied in many other specific forms. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the scope of the invention as defined by the appended set of claims.

## Claims

1. A method comprising:
receiving, by a station, STA, (102) from an access point, AP, (104), a message using a first radio access technology, RAT, wherein the STA (102) is configured to operate in the first RAT and a second RAT, wherein the first RAT is a Wi-Fi and the second RAT is a cellular, wherein the message is a probe response or a beacon frame and wherein the message comprises a channel quality indicator, CQI, of the second RAT;
determining, by the STA (102), whether to transition from the first RAT to the second RAT in accordance with the message and based on the CQI; and
upon determining to transition from the first RAT to the second RAT,
transmitting, by the STA (102) to the AP (104), a disassociation request, and
transmitting, by the STA (102) to a communications controller (106), an association request.

2. The method of claim 1, wherein the channel quality indicator comprises a neighbor report element, where the neighbor report element contains vendor specific information about cellular link priority.

3. The method of claim 1, further comprising transmitting, by the STA (102) to the AP (104), before receiving the message, a channel quality request.

4. A station, STA, (102) comprising:
a processor (604); and
a non-transitory computer readable storage medium storing programming for execution by the processor (604), the programming including instructions to
receive, from an access point, AP, (104), a message using a first radio access technology, RAT, wherein the STA (102) is configured to operate in the first RAT and a second RAT, wherein the first RAT is a Wi-Fi and the second RAT is a cellular, wherein the message is a probe response or a beacon frame and wherein the message comprises a channel quality indicator, CQI, of the second RAT,
determine whether to transition from the first RAT to the second RAT in accordance with the message and based on the CQI, and
upon determining to transition from the first RAT to the second RAT,
transmit, to the AP (104), a disassociation request, and
transmit, to a communications controller (106), an association request.

## Patentansprüche

1. Verfahren, umfassend:
Empfangen einer Nachricht von einem Zugangspunkt (AP) (104) durch eine Station (STA) (102) unter Verwendung einer ersten Funkzugangstechnologie (RAT), wobei die STA (102) dazu konfiguriert ist, mit der ersten RAT und einer zweiten RAT zu arbeiten, wobei die erste RAT ein Wi-Fi und die zweite RAT ein Mobilfunk ist, wobei die Nachricht eine Testantwort oder ein Beacon-Frame ist, und wobei die Nachricht einen Kanalqualitätsindikator (CQI) der zweiten RAT umfasst;
Bestimmen durch die STA (102) und in Übereinstimmung mit der Nachricht und basierend auf dem CQI, ob von der ersten RAT zu der zweiten RAT gewechselt wird; und
nachdem bestimmt wurde, von der ersten RAT auf die zweite RAT zu wechseln,
Übermitteln einer Trennungsanfrage durch die STA (102) an den AP (104), und
Übermitteln einer Verbindungsanfrage durch die STA (102) an die Kommunikationssteuerung (106).

2. Verfahren nach Anspruch 1, wobei der Kanalqualitätsindikator ein Nachbarberichtselement umfasst, wobei das Nachbarberichtselement herstellerspezifische Informationen über die Priorität der Mobilfunkverbindung beinhaltet.

3. Verfahren nach Anspruch 1, ferner Folgendes umfassend:
Übermitteln einer Kanalqualitätsanfrage durch die STA (102) an den AP (104).

4. Station STA (102), umfassend:
ein Prozessor (604); und
ein nichtflüchtiges, computerlesbares Speichermedium, das Programmierung zur Ausführung durch den Prozessor (604) speichert, wobei die Programmierung Anweisungen zu Folgendem beinhaltet
Empfangen einer Nachricht von einem Zugangspunkt (AP) (104) unter Verwendung einer ersten Funkzugangstechnologie (RAT), wobei die STA (102) dazu konfiguriert ist, in der ersten RAT und in einer zweiten RAT zu arbeiten, wobei die erste RAT ein Wi-Fi und die zweite RAT ein Mobilfunk ist, wobei die Nachricht eine Testantwort oder ein Beacon-Frame ist, und wobei die Nachricht einen Kanalqualitätsindikator (CQI) der zweiten RAT umfasst,
Bestimmen ob, in Übereinstimmung mit der Nachricht und basierend auf dem CQI, von der ersten RAT zu der zweiten RAT gewechselt wird, und
nachdem bestimmt wurde, von der ersten RAT auf die zweite RAT zu wechseln,
Übermitteln einer Trennungsanfrage an den AP (104), und
Übermitteln einer Verbindungsanfrage an die Kommunikationssteuerung (106).

## Revendications

1. Procédé comprenant :
la réception, par une station, STA, (102) d'un point d'accès, AP, (104), d'un message à l'aide d'une première technologie d'accès radio, RAT, dans lequel la STA (102) est configurée pour fonctionner dans la première RAT et une seconde RAT, dans lequel la première RAT est une connexion Wi-fi et la seconde RAT est une connexion cellulaire, dans lequel le message est une réponse de sonde ou une trame de balise et dans lequel le message comprend un indicateur de qualité de canal, CQI, de la seconde RAT ;
le fait de déterminer, par la STA (102), s'il faut passer de la première RAT à la seconde RAT conformément au message et sur la base du CQI ; et
après avoir déterminé qu'il faut passer de la première RAT à la seconde RAT,
la transmission, par la STA (102) à l'AP (104), d'une demande de dissociation, et
la transmission, par la STA (102) à un dispositif de commande de communication (106), d'une demande d'association.

2. Procédé selon la revendication 1, dans lequel l'indicateur de qualité de canal comprend un élément de rapport voisin, l'élément de rapport voisin contenant des informations spécifiques de fournisseur concernant une priorité de liaison cellulaire.

3. Procédé selon la revendication 1, comprenant en outre la transmission, par la STA (102) à l'AP (104), avant la réception du message, d'une demande de qualité de canal.

4. Station, STA, (102) comprenant :
un processeur (604) ; et
un support de stockage lisible par ordinateur non transitoire stockant un programme à exécuter par le processeur (604), le programme comportant des instructions pour
recevoir, d'un point d'accès, AP, (104) un message à l'aide d'une première technologie d'accès radio, RAT, dans laquelle la STA (102) est configurée pour fonctionner dans la première RAT et une seconde RAT, dans laquelle la première RAT est une connexion Wi-fi et la seconde RAT est une connexion cellulaire, dans laquelle le message est une réponse de sonde ou une trame de balise et dans laquelle le message comprend un indicateur de qualité de canal, CQI, de la seconde RAT,
déterminer s'il faut passer de la première RAT à la seconde RAT conformément au message et sur la base du CQI, et
après avoir déterminé qu'il faut passer de la première RAT à la seconde RAT,
transmettre, à l'AP (104), une demande de dissociation, et
transmettre, à un dispositif de commande de communication (106), une demande d'association.
